# EUROPEAN PATENT APPLICATION

(11) **EP 1 708 235 A2**
(43) Date of publication of application: **04.10.2006**
(21) Application number: 06290499.0
(22) Date of filing: 29.03.2006
(51) Int. Cl.: H01J 17/49, H01J 17/06

(54) **Plasma display panel**

(30) Priority: 30.03.2005 KR 2005026756
(71) Applicant: LG ELECTRONICS INC., 150-721 Seoul (KR)
(72) Inventor: Kim, Wootae, Yongin-si, Gyeonggi-do (KR)
(74) Representative: Vignesoult, Serge L. M.

(57) **Abstract**

A plasma display panel is provided. Particularly, an embodiment of the present invention suggests a sustain electrode structure comprising opaque electrodes (202,203) instead of transparent electrodes to improve an aperture ratio. The number of electrode lines (203a,203b) pertained to each sustain electrode is suggested to improve the aperture ratio, and a first projection electrode (203d) projecting to a central portion of a discharge cell from the electrode line can allows a discharge initiation voltage level to be decreased. A second projection electrode projecting in a direction away from the central portion of the discharge cell can be advantageous of increasing discharge diffusion efficiency within the discharge cell.

## Description

### BACKGROUND OF THE INVENTION

### Field of the Invention

The present invention relates to a display apparatus, and more particularly, to a plasma display panel.

### Description of the Related Art

In a typical plasma display panel, a barrier rib formed between a front substrate and a rear substrate composes one unit cell. Each of the unit cells is filled with a main discharge gas such as neon (Ne), helium (He) or a mixture gas of Ne and He and an inert gas containing a trace amount of xenon. When a discharge event occurs by a high voltage frequency, the inert gas generates vacuum ultraviolet rays and causes phosphors formed between the barrier ribs to emit light to thereby realize an image. Such a plasma display panel can be configured to be thin and light, and thus, it has been highlighted as a next generation display apparatus.

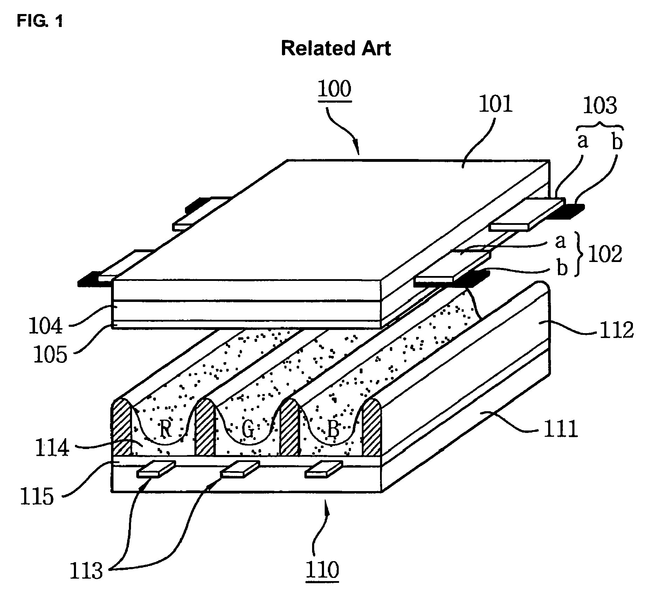

FIG. 1 illustrates a structure of a typical plasma display panel.

As illustrated in FIG. 1, the plasma display panel comprises a front panel 100 and a rear panel 110 which are coupled to run parallel to each other with a certain distance therebetween. In the front panel 100, a pair of sustain electrodes comprising a scan electrode 102 and a sustain electrode 103 is arranged on a front substrate 101, which is a display surface on which an image is displayed. In the rear panel 110, plurality of address electrodes 113 are arranged on a rear substrate 111, which is a rear surface, to intersect the pair of the sustain electrodes.

As mentioned above, the front panel 100 comprises the scan electrode 102 and the sustain electrode 103, which are arranged in a pair. Particularly, the scan electrode 102 comprises a transparent electrode 102a and a bus electrode 102b, and the sustain electrode 103 comprises a transparent electrode 103a and a bus electrode 103b. The transparent electrodes 102a and 103a are formed of transparent indium tin oxide (ITO). An upper dielectric layer 104 covers the scan electrode 102 and the sustain electrode 103, and a protection layer 105 is formed on the upper dielectric layer 104.

The rear panel 110 comprises barrier ribs 112 to partition discharge cells. The plurality of address electrodes 113 are arranged in parallel with respect to the barrier ribs 112. Phosphors 114 expressing red (R), green (G) and blue (B) colors are coated on the address electrodes 113. A rear dielectric layer 115 is formed between the address electrodes 113 and the phosphors 114.

Meanwhile, the transparent electrodes 102a and 103a, which respectively composing the scan electrode 102 and the sustain electrode 103 of the typical plasma display panel, are formed of expensive ITO. The transparent electrodes 102a and 103a become one cause for increasing manufacturing costs for the plasma display panel. Therefore, many researchers have focused to develop plasma display panels, which can secure a visibility characteristic sufficient for viewers to watch and a driving characteristic while reducing manufacturing costs.

### SUMMARY OF THE INVENTION

Accordingly, an object of the present invention is to solve at least the problems and disadvantages of the background art.

According to an embodiment of the present invention, a plasma display panel comprises a substrate and sustain electrodes formed in a pair on the substrate. Each of the sustain electrodes may comprise at least two electrode lines intersecting a discharge cell, and at least one projection electrode connected to the electrode line nearest to a central portion of the discharge cell and projecting toward a central direction within the discharge cell.

According to another embodiment of the present invention, a plasma display panel comprises a substrate and a sustain electrode formed on the substrate. The sustain electrode may comprise at least two electrode lines intersecting a discharge cell, at least one first projection electrode connected to the electrode line nearest to a central portion of the discharge cell and projecting toward a central direction within the discharge cell, and a second projection electrode connected to the electrode line furthest from the central portion of the discharge cell and projecting in a direction away from the central portion of the discharge cell.

According to a further another embodiment of the present invention, a plasma display panel comprises a substrate and sustain electrodes formed in a pair on the substrate. Each of the sustain electrodes may comprise two electrode lines intersecting a discharge cell, at least one first projection electrode connected to the electrode line nearest to a central portion of the discharge cell and projecting toward a central direction within the discharge cell, and a second projection electrode connected to the electrode line furthest from the central portion of the discharge cell and projecting in a direction away from the central portion of the discharge cell.

According to the embodiments of the present invention, the plasma display panel structure can increase an aperture ratio, reduce a discharge initiation voltage level and increase discharge diffusion efficiency within the discharge cell. On the basis of these advantages, transparent electrodes are not necessarily formed, thereby reducing plasma display panel manufacturing costs.

### BRIEF DESCRIPTION OF THE DRAWINGS

The invention will be described in detail with reference to the following drawings in which like numerals refer to like elements.

FIG. 1 illustrates a structure of a typical plasma display panel;

FIG. 2 illustrates a plasma display panel according to a first embodiment of the present invention;

FIG. 3 illustrates an electrode structure of the plasma display panel according to the first embodiment of the present invention;

FIG. 4 illustrates a plasma display panel according to a second embodiment of the present invention;

FIG. 5 illustrates an electrode structure of the plasma display panel according to the second embodiment of the present invention;

FIG. 6 illustrates another electrode structure of the plasma display panel according to the second embodiment of the present invention; and

FIG. 7 illustrates a further another electrode structure of the plasma display panel according to the second embodiment of the present invention.

### DETAILED DESCRIPTION OF PREFERRED EMBODIMENTS

Preferred embodiments of the present invention will be described in a more detailed manner with reference to the drawings.

According to an embodiment of the present invention, a plasma display panel comprises a substrate and sustain electrodes formed in a pair on the substrate, wherein each of the sustain electrodes comprises at least two electrode lines intersecting a discharge cell, and at least one projection electrode connected to the electrode line nearest to a central portion of the discharge cell and projecting toward a central direction within the discharge cell.

According to an embodiment of the present invention, a length of the projection electrode may range substantially from 10 µm to 70 µm.

According to an embodiment of the present invention, a difference between a discharge gap distance of the nearest corresponding electrode lines and a discharge gap distance of the corresponding projection electrodes may range substantially from 20 µn to 140 µm.

According to an embodiment of the present invention, a width of a portion of the projection electrode connected to the electrode line may be more than a width of an edge portion of the projection electrode.

According to an embodiment of the present invention, each of the sustain electrodes may comprise a bridge electrode for coupling the adjacent electrode lines to each other.

According to another embodiment of the present invention, a plasma display panel comprises a substrate and a sustain electrode formed on the substrate, wherein the sustain electrode comprises at least two electrode lines intersecting a discharge cell, at least one first projection electrode connected to the electrode line nearest to a central portion of the discharge cell and projecting toward a central direction within the discharge cell, and a second projection electrode connected to the electrode line furthest from the central portion of the discharge cell and projecting in a direction away from the central portion of the discharge cell.

According to another embodiment of the present invention, when the number of the first projection electrodes equals one, the first projection electrode may be formed at the central portion of the discharge cell.

According to another embodiment of the present invention, when the number of the first projection electrodes equals two, the two first projection electrodes may be formed to be symmetric with each other on opposite sides of the central portion of the discharge cell.

According to another embodiment of the present invention, when the number of the first projection electrodes equals three, one first projection electrode may be formed at the central portion of the discharge cell and the remaining two first projection electrodes may be formed to be symmetric with each other on opposite sides of the central portion of the discharge cell.

According to another embodiment of the present invention, when the number of the first projection electrodes is plural, the width and length of each of the first projection electrodes may be different from each other.

According to another embodiment of the present invention, a width of a portion of the first projection electrode connected to the electrode line may be more than a width of an edge portion of the first projection electrode.

According to another embodiment of the present invention, a length of the first projection electrode may range substantially from 10 µm to 70 µm.

According to another embodiment of the present invention, two sustain electrodes may be formed in a pair within one discharge cell.

According to another embodiment of the present invention, a difference between a discharge gap distance of the nearest corresponding electrode lines and a discharge gap distance of the corresponding first projection electrodes may range substantially from 20 µn to 140 µm.

According to another embodiment of the present invention, the second projection electrode may be formed at a central portion of the electrode line.

According to another embodiment of the present invention, the second projection electrode may be in a direction up to a barrier rib partitioning the discharge cell.

According to another embodiment of the present invention, the second projection electrode may extend in a direction over a barrier rib partitioning the discharge cell.

According to another embodiment of the present invention, the sustain electrode may further comprise a bridge electrode for coupling the adjacent electrode lines to each other.

According to another embodiment of the present invention, the two electrode lines may be coupled through one bridge electrode.

According to another embodiment of the present invention, the bridge electrode may be formed within the discharge cell.

According to another embodiment of the present invention, the bridge electrode may be formed over a barrier rib partitioning the discharge cell.

According to another embodiment of the present invention, a width of the barrier rib, which partitions the discharge cell and is formed at a portion where the second projection electrode extends to, may equal substantially 200 µm or less.

According to another embodiment of the present invention, the width of the barrier rib ranges from 90 µm to 100 µm.

According to another embodiment of the present invention, a width of the electrode lines may range substantially from 20 µm to 70 µm.

According to a further another embodiment of the present invention, a plasma display panel comprises a substrate and sustain electrodes formed in a pair on the substrate, wherein each of the sustain electrodes comprises two electrode lines intersecting a discharge cell, at least one first projection electrode connected to the electrode line nearest to a central portion of the discharge cell and projecting toward a central direction within the discharge cell, and a second projection electrode connected to the electrode line furthest from the central portion of the discharge cell and projecting in a direction away from the central portion of the discharge cell.

According to the further another embodiment of the present invention, each of the sustain electrodes further may comprise one bridge electrode for coupling the two electrode lines to each other.

According to the further another embodiment of the present invention, the first projection electrodes of the sustain electrodes may be formed in pairs to face to each other.

Distinctive characteristics and configuration of embodiments of the present invention will be provided in the following description section and the accompanying drawings. Advantages and characteristics of the embodiments and methods of achieving them will be better understood when the embodiments are described in detail with reference to the accompanying drawings. Also, the same or like reference numbers denote the same or like elements in different drawings.

Hereinafter, embodiments of the present invention will be described in detail with reference to the accompanying drawings.

<First Embodiment>

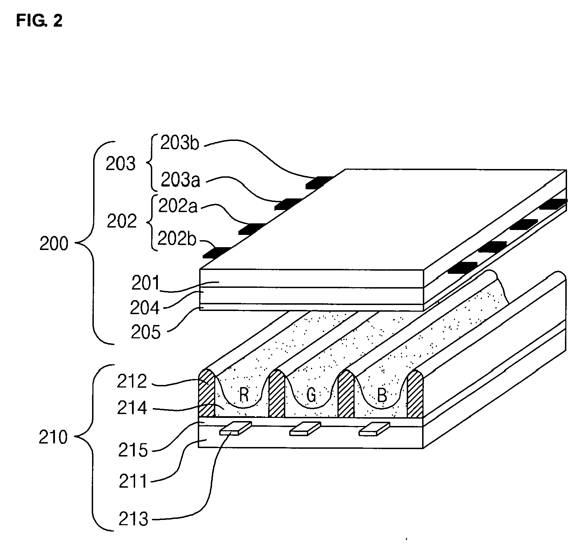

FIG. 2 illustrates a plasma display panel according to a first embodiment of the present invention.

As illustrated in FIG. 2, the plasma display panel according to the first embodiment of the present invention comprises a front panel 200 and a rear panel 210, which are connected to each other with a certain distance therebetween. Also, the plasma display panel comprises address electrodes 213, which are formed over a rear substrate 211 in the direction of intersecting a pair of sustain electrodes 202 and 203, and barrier ribs 212, which partition plurality of discharge cells and are formed between a front substrate 201 and the rear substrate 211.

The front panel 200 comprises the aforementioned pair of the sustain electrodes 202 and 203 arranged over the front substrate 201. The pair of the sustain electrodes 202 and 203 is classified into a scan electrode 202 and a sustain electrode 203 depending on functions thereof, a driving pulse of each of the scan electrode 202 and the sustain electrode 203 is supplied. The pair of the electrodes 202 and 203 restricts discharge current and is covered with an upper dielectric layer 204 insulating the pair of the sustain electrodes 202 and 203 from each other. A protection layer 205 is formed over the upper dielectric layer 204 to set an ease discharge condition. The protection layer 205 includes magnesium oxide (MgO).

In the rear panel 210, the barrier ribs 212 are formed over the rear substrate 211 to partition plurality of discharge spaces, i.e., the discharge cells. The address electrodes 213, which generate vacuum ultraviolet rays via an address discharge are arranged in the direction of intersecting the pair of the sustain electrodes 202 and 203. Phosphors 214 expressing R, G and B colors are coated over the rear panel 210 to display an image. The phosphors 214 emit visible rays. A rear dielectric layer 215 is formed between the address electrodes 213 and the phosphors 214 to protect the address electrodes 213.

Different from the typical pair of the sustain electrodes 102 and 103 illustrated in FIG. 1, the pair of the sustain electrodes 202 and 203 according to the first embodiment of the present invention are formed of opaque metal electrodes. Instead of using ITO, which is a typical transparent electrode material, a typical bus electrode material such as silver (Ag), copper (Cu) or chrome (Cr) is used to form the pair of the sustain electrodes 202 and 203. As a result, plasma display panel manufacturing costs can be reduced.

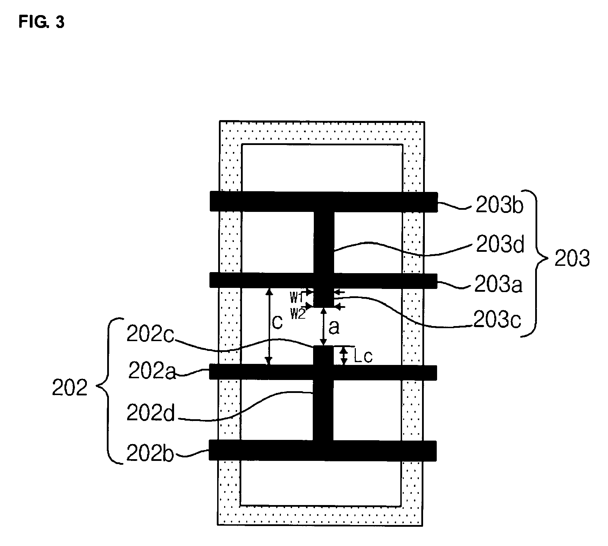

FIG. 2 also illustrates a unit discharge cell for each of R, G and B colors. Within one discharge cell, each of the sustain electrodes 202 and 203 is formed in plurality of electrode lines. More specifically, the first sustain electrode 202 comprises two electrode lines 202a and 202b, and the second sustain electrode 203 is arranged symmetric to the first sustain electrode 202 with respect to a central portion of the discharge cells and comprises two electrode lines 203a and 203b. This specific configuration of the sustain electrodes 202 and 203 take account of an aperture ratio and discharge diffusion efficiency related to the use of the opaque sustain electrodes 202 and 203. Considering the aperture ratio, those electrode lines with narrow widths are used, and in contrast, considering the discharge diffusion efficiency, a number of the electrode lines are used. The number of the electrode lines is determined in consideration of the aperture ratio and the discharge diffusion efficiency. A structure of the sustain electrodes 202 and 203 according to the first embodiment of the present invention will be described in detail with reference to FIG. 3.

FIG. 3 illustrates an electrode structure of the plasma display panel according to the first embodiment of the present invention. Particularly, FIG. 3 illustrates a simplified arrangement structure of the pair of the sustain electrodes 202 and 203 within one discharge cell of the plasma display panel illustrated in FIG. 2.

As illustrated in FIG. 3, the sustain electrodes 202 and 203 are arranged on the substrate in a pair to be symmetric with respect to a central portion of the discharge cell. The sustain electrodes 202 and 203 comprise at least two electrode lines 202a and 202b and 203a and 203b, respectively. The electrode lines 202a, 202b, 203a, and 203b intersect the discharge cell. The sustain electrodes 202 and 203 comprise respective projection electrodes 202c and 203c, which project towards the center of the discharge cell and are connected to the respective electrode lines 202a and 203a, which are disposed most adjacent to the central portion of the discharge cell. Also, the sustain electrodes 202 and 203 further comprise respective bridge electrodes 202d and 203d, which provide a coupling between the electrode line 202a and the electrode line 202b and between the electrode line 203a and the electrode line 203b, respectively.

The electrode lines 202a, 202b, 203a and 203b intersect the discharge cell and extend to one direction of the plasma display panel. Those discharge cells allocated at the same electrode line unit are supplied with the same driving pulse. The electrode lines according to the first embodiment of the present invention are formed to have a narrow width to improve an aperture ratio. Also, plurality of electrode lines (e.g., the electrode lines 202a, 202b, 203a, and 203b) are employed to improve diffusion efficiency. However, in consideration of the aperture ratio, a certain number of the electrode lines are suggested.

The projection electrodes 202c and 203c are connected respectively to the electrode lines 202a and 203a allocated nearest to the center of the discharge cell and project toward the central portion within the discharge cell. The projection electrodes 202c and 203c lower a voltage that initiates a discharge event when driving the plasma display panel. That is, a distance between the electrode lines 202a and 203a adjacent to each other with respect to the central portion of the discharge cell become increased depending on the suggested number of the electrode lines. Since the electrode line 202a and the electrode line 203a are increasingly apart from each other, the discharge initiation voltage generally increases. Hence, the electrode lines 202a and 203a in the first embodiment of the present invention comprise the projection electrodes 202c and 203c connected to the electrode lines is 202a and 203a, respectively. For the projection electrodes 202c and 203c, the discharge event is instigated even with the low discharge initiation voltage, and thus, the discharge initiation voltage of the plasma display panel can be reduced. Herein, the discharge initiation voltage is a voltage level that initiates a discharge event when a pulse is supplied to at least one of the sustain electrodes 202 and 203.

The projection electrodes 202c and 203c have a predetermined length Lc to reduce the discharge initiation voltage effectively. Specifically, the predetermined length Lc of the projection electrodes 202c and 203c ranges from approximately 10 µm to approximately 70 µm. A discharge gap distance c between the electrode line 202a and the electrode line 203a, which face to each other being adjacent to each other, and a discharge gap distance a between the projection electrodes 202c and 203c, which face to each other may be set to have a difference equal to or greater than approximately 20 µm and equal to or less than approximately 140 µm.

Since the projection electrodes 202c and 203c are very small, widths W1 of portions of the projection electrodes 202c and 203c, connected to the electrode lines 202a and 203a, respectively, may be more than the widths W2 of edge portions of the projection electrodes 202c and 203c practically due to a process difference in manufacturing processes. Also, the widths W2 of the edge portions of the projection electrodes 202c and 203c may be enlarged depending on need.

Each of the bridge electrodes 202d and 203d couples the corresponding electrode lines with each other. That is, the bridge electrode 202d of the sustain electrode 202 couples the electrode line 202a with the electrode line 202b, and the bridge electrode 203d of the sustain electrode 203 couples the electrode line 203a with the electrode line 203b. The bridge electrodes 202d and 203d aid the discharge initiated through the projection electrodes 202c and 203c to be diffused easily to those electrode lines 202b and 203d, which are disposed away from the central portion of the discharge cell.

The electrode structure according to the first embodiment of the present invention is configured with a certain number of the electrode lines, and this specific configuration can improve the aperture ratio. The projection electrodes can reduce the discharge initiation voltage. Those bridge electrodes and electrode lines disposed away from the central portion of the discharge cell can enhance diffusion efficiency. In overall, luminous efficiency of the plasma display panel can be accelerated. That is, since the plasma display panel according to the first embodiment of the present invention can have substantially the same brightness or brighter than the typical plasma display panel, use of ITO, which is an expensive electrode material, can be eliminated.

<Second Embodiment>

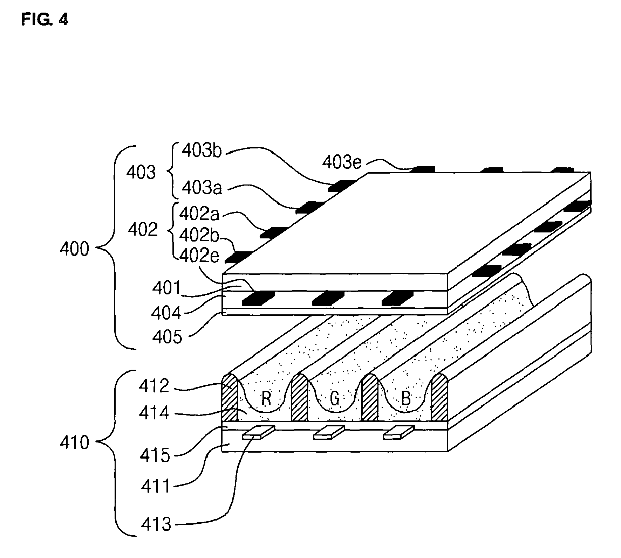

FIG. 4 illustrates a plasma display panel according to a second embodiment of the present invention.

As illustrated in FIG. 4, the plasma display panel according to the second embodiment of the present invention comprises a front panel 400 and a rear panel 410, which are connected to each other with a certain distance therebetween. Also, the plasma display panel comprises address electrodes 413, which are formed over a rear substrate 411 in the direction of intersecting a pair of the sustain electrodes 402 and 403, and barrier ribs 412, which partition plurality of discharge cells and, are formed between a front substrate 401 and the rear substrate 411. Herein, detailed description of those characteristics of the plasma display panel according to the second embodiment, which are substantially identical to those of the plasma display panel according to the first embodiment, will be omitted.

The pair of the sustain electrodes 402 and 403 are formed of opaque metal electrodes. As a result, plasma display panel manufacturing costs can be reduced.

FIG. 4 also illustrates a unit discharge cell for each of R, G and B colors. Within one discharge cell, each of the sustain electrodes 402 and 403 is formed in plurality of electrode lines in consideration of an aperture ratio and discharge diffusion efficiency. In the second embodiment of the present invention, the sustain electrodes 402 and 403 comprise another respective projection electrodes 402e and 403e projecting to another portion directed in opposite to the central portion of the discharge cell. The additional projection electrodes 402e and 403e can provide an improved level of discharge efficiency compared with the discharge efficiency of the first embodiment.

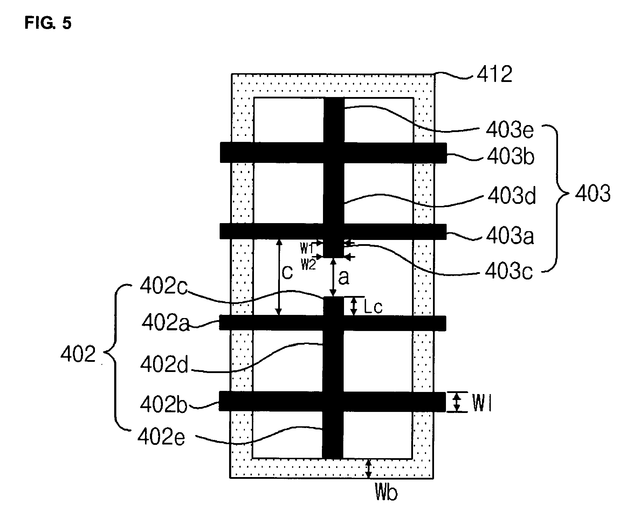

A structure of the pair of the sustain electrodes 402 and 403 according to the second embodiment will be described in detail with reference to FIGS. 5 to 7 set forth hereinafter.

FIG. 5 illustrates an electrode structure of the plasma display panel according to the second embodiment of the present invention. Particularly, FIG. 5 illustrates a simplified arrangement structure of the pair of the sustain electrodes 402 and 403 within one discharge cell of the plasma display panel illustrated in FIG. 4.

As illustrated in FIG. 5, the sustain electrodes 402 and 403 are arranged on the substrate in a pair within the discharge cell. The sustain electrodes 402 and 403 comprise at least two electrode lines 402a and 402b and 403a and 403b, respectively. Hereinafter, the electrode lines 402a, 402b, 403a, and 403b intersect the discharge cell. The sustain electrodes 402 and 403 also comprise first projection electrodes 402c and 403c, bridge electrodes 402d and 403d and second projection electrodes 402e and 403e, respectively. The first projection electrodes 402c and 403c project towards the center of the discharge cell and are connected to the respective electrode lines 402a and 403a, which are disposed most adjacent to the central portion of the discharge cell. Also, the bridge electrodes 202d and 203d provide a coupling between the electrode line 202a and the electrode line 202b and between the electrode line 203a and the electrode line 203b, respectively. As described above, the second projection electrodes 402e and 403e are connected respectively to the electrode lines 402b and 403b disposed furthest from the central portion of the discharge cell and project toward the other portion directed opposite to the central portion of the discharge cell.

The electrode lines 402a, 402b, 403a and 403d intersect the discharge cell and extend to one direction of the plasma display panel. The electrode lines according to the second embodiment of the present invention are formed to have a narrow width to improve an aperture ratio. More specifically, each of the first to fourth electrode lines has a width W1 ranging from approximately 20 µm to approximately 70 µm to improve the aperture ratio and make the discharge occur easily.

Also, plurality of electrode lines (e.g., the electrode lines 402a, 402b, 403a, and 403b) are employed to improve diffusion efficiency. However, in consideration of the aperture ratio, a certain number of the electrode lines are suggested. For instance, the number of the electrode lines of one sustain electrode is two in the second embodiment of the present invention. That is, the electrode lines 402a and 403a most adjacent to the central portion of the discharge cell are connected to the first projection electrodes 402c and 403c, respectively. The electrode lines 402a and 403a form a path where the discharge diffusion occurs as simultaneous as the discharge is initiated. The electrode lines 402b and 403b are connected to the second projection electrodes 402e and 403e, respectively. The electrode lines 402b and 403b most away from the central portion of the discharge cell serve a role in diffusing the discharge to peripheral regions of the discharge cell.

Within one discharge cell, the first projection electrodes 402c and 403c are coupled respectively with the electrode lines 402a and 403a, disposed closed to the central portion of the discharge cell, and project toward the central portion of the discharge cell. Particularly, the first projection electrodes 402c and 403c are disposed at the center of the discharge cell. Since the first projection electrodes 402c and 403c are arranged to correspond to each other at the center of the electrode lines 402a and 403a, respectively, the discharge initiation voltage of the plasma display panel can be reduced to a greater extent.

The first projection electrodes 402c and 403c have a predetermined length Lc to reduce the discharge initiation voltage effectively. Specifically, the predetermined length Lc of the first projection electrodes 402c and 403c ranges from approximately 10 µm to approximately 70 µm. A discharge gap distance c between the electrode line 402a and the electrode line 403a, which face to each other being adjacent to each other from the central portion of the discharge cell, and a discharge gap distance a between the first projection electrodes 402c and 403c, which face to each other, may be set to have a difference equal to or greater than approximately 20 µm and equal to or less than approximately 140 µm.

Widths W1 of portions of the first projection electrodes 402c and 403c, connected to the electrode lines 402a and 403a, respectively, may practically be more than the widths W2 of edge portions of the first projection electrodes 402c and 403c. Also, the widths W2 of the edge portions of the first projection electrodes 402c and 403c may be enlarged depending on need.

Each of the bridge electrodes 402d and 403d couples the corresponding electrode lines with each other. The bridge electrodes 402d and 403d aid the discharge initiated through the projection electrodes to be diffused easily to those electrode lines 402b and 403d, which are disposed away from the central portion of the discharge cell.

Although the bridge electrodes 402d and 403d are disposed within the disposed cell, depending on need, the bridge electrodes 402d and 403d can be formed over the barrier rib 412 partitioning the discharge cell. As illustrated in FIG. 5, the two bridge electrodes 402d and 403d are electrodes coupling the corresponding two electrode lines. However, one bridge electrode is sufficient when the discharge diffusion and the aperture ratio are considered at the same time.

The second projection electrodes 402e and 403e are coupled respectively with the electrode lines 402b and 403b furthest from the central portion of the discharge cell and project to the other portion directed opposite to the central portion of the discharge cell. The second projection electrodes 402e and 403e can allow the discharge to occur at the gaps between the electrode lines 402b and 403b and the barrier rib 412. In other words, by increasing the discharge diffusion efficiency, luminous efficiency of the plasma display panel can be improved.

The second projection electrodes 402e and 403e can extend up to the barrier rib 412 partitioning the discharge cell. If the aperture ratio can be compensated from other parts, the second projection electrodes 402e and 403e can extend partially over the barrier rib 412 to improve the discharge diffusion to a greater extent.

In the second embodiment of the present invention, disposing the second projection electrodes 402e and 403e at the center of the respective electrode lines 402b and 403b can make the diffusion occur evenly throughout the peripheral regions of the discharge cell.

Among portions of the barrier rib 412 partitioning the discharge cell, those portions of the barrier rib 412 disposed in a region to which the second projection electrodes 402e and 403e extend have a width Wb of approximately 200 µm or less. Although not illustrated, a black layer is formed over the barrier rib 412 to secure contrast and reduce an incidence that emitted discharge rays are displayed as being diffused to adjacent discharge cells. Since the width Wb of the portions of the barrier rib 412 is proposed to be less than approximately 200 µm, the discharge cell has an increased area. As a result, the luminous efficiency can be accelerated, and a decrease of the aperture ratio by the second projection electrodes 402e and 403e can be compensated. Particularly, the luminous efficiency is optimum when the width Wb of the portions of the barrier rib 412 disposed in the region to which the second projection electrodes 402e and 403e ranges from approximately 90 µm to approximately 100 µm.

As described above, the electrode structure according to the second embodiment of the present invention have a certain number of the electrode lines, and thus, the aperture ratio can be improved. The first projection electrodes can reduce the discharge initiation voltage, and the second projection electrodes can increase the discharge luminous efficiency to a greater extent. Since the discharge initiated at the low voltage can be diffused to a further distance than the usual case, the luminous efficiency can be improved by using a glow discharge and a discharge at a positive column. As a result, the luminous efficiency of the plasma display panel can be improved in overall. That is, since the plasma display panel according to the second embodiment can have substantially the same or brighter than the typical plasma display panel, use of ITO as an electrode material is not necessary.

The pair of the sustain electrodes 402 and 403 illustrated in FIG. 5 have substantially the same structure. However, depending on need, the layout of the electrode structure can be modified within the scope of the present invention described in the claims of the present invention.

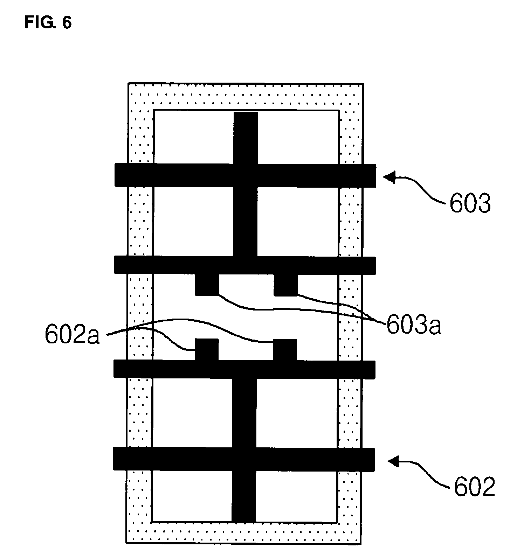

FIG. 6 illustrates another electrode structure of the plasma display panel according to the second embodiment of the present invention.

FIG. 6 illustrates a simplified arrangement structure of the pair of the sustain electrodes within one discharge cell of the plasma display panel illustrated in FIG. 4. Those characteristics of another electrode structure substantially same as those described in FIG. 5 are not described.

As illustrated in FIG. 6, a pair of sustain electrodes 602 and 603 according to the second embodiment of the present invention comprise two of first projection electrodes 602c and 603c, respectively.

The first projection electrodes 602c and 603c are coupled respectively with electrode lines 402a and 403a, which are disposed nearest to the center of the discharge cell, and project to a central portion of the discharge cell. Particularly, each of the first projection electrodes 602c and 603c are arranged to be symmetric with respect to the central portion of the discharge cell.

By forming the two of the first projection electrodes for each of the sustain electrodes, the sustain electrodes can have an increased area at the center of the discharge cell. Before the discharge is initiated, lots of charges are generated within the gaps of the discharge cell, the discharge initiation voltage can be lowered to a greater extent and the discharge speed can increase. After the discharge is initiated, an amount of wall charges increases, and as a result, brightness increases and the discharge diffusion takes place evenly throughout the entire discharge cell.

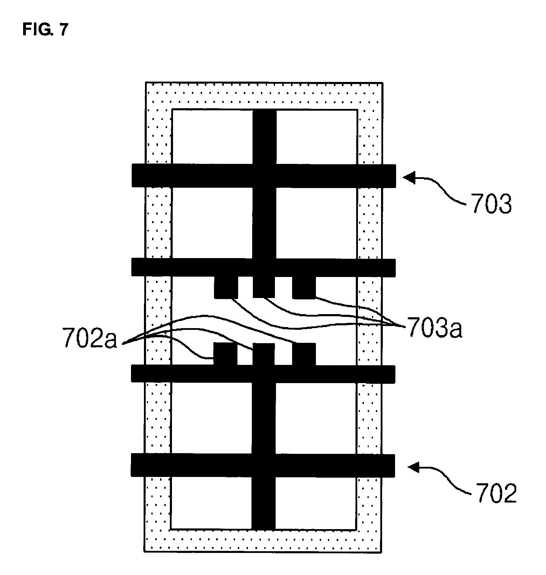

FIG. 7 illustrates a further another electrode structure of the plasma display panel according to the second embodiment of the present invention.

FIG. 7 illustrates a simplified arrangement structure of the pair of the sustain electrodes within one discharge cell of the plasma display panel illustrated in FIG. 4. Those characteristics of further another electrode structure substantially same as those described in FIGS. 5 and 6 are not described.

As illustrated in FIG. 7, a pair of sustain electrodes 702 and 703 according to the second embodiment of the present invention comprise three of first projection electrodes 702c and 703c, respectively.

The first projection electrodes 702c and 703c are coupled respectively with electrode lines 402a and 403a, which are disposed nearest to the center of the discharge cell, and project to a central portion of the discharge cell. Particularly, one of each of the first projection electrodes 702c and 703c is disposed at the center of the discharge cell, where the other two of each of the first projection electrodes 702c and 703c are arranged to be symmetric with respect to the center of the discharge cell. Since each of the first and second sustain electrodes has the three of the first projection electrodes, the discharge initiation voltage can be lowered to a certain extent greater than the discharge initiation voltage described in FIGS. 5 and 6. The discharge speed can increase more than the cases described in FIGS. 5 and 6. Also, after the discharge is initiated, brightness increases to a greater extent than the other cases, and the discharge can be diffused evenly throughout the entire discharge cell.

According to the second embodiment of the present invention, the number of the first projection electrodes can be increased, and thus, the area of the sustain electrodes increases at the central portion of the discharge cell. This increasing area of the sustain electrodes contribute to reduction of the discharge initiation voltage and increase of the brightness. The discharge occurs strongly at the central portion of the discharge cell, and it is necessary to consider that the brightest discharge rays are emitted at the central portion. In more detail, as the number of the first projection electrodes increases, the rays emitted at the central portion of the discharge cell can be blocked. Hence, an amount of the emitted rays can be reduced. In consideration of this fact as well as the discharge initiation voltage and the brightness efficiency, the structure of the sustain electrodes are designed by selecting the optimum number of the line electrode units and projection electrodes.

With a certain number of the line electrode units of the sustain electrodes, the aperture ratio can be improved. Also, the discharge initiation voltage can be reduced by forming the first projection electrodes, which project to the central portion of the discharge cell from the electrode lines. Furthermore, since the other projection electrodes, which project to another portion of the discharge cell directed opposite to the central portion of the discharge cell from the electrode lines, are formed, the discharge diffusion efficiency within the discharge cell can be improved. Based on these effects, electrodes formed of ITO can be eliminated from the sustain electrodes, and thus, plasma display panel manufacturing costs can be reduced. In addition, the electrode structure according to the embodiments of the present invention makes it possible to use a low level of driving voltage in a long-gap structure that discharge gaps are elongated to increase the luminous efficiency.

The embodiment of the invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A plasma display panel comprising:
a substrate; and
sustain electrodes formed in a pair on the substrate,
wherein each of the sustain electrodes comprises at least two electrode lines intersecting a discharge cell, and at least one projection electrode connected to the electrode line nearest to a central portion of the discharge cell and projecting toward a central direction within the discharge cell.

2. The plasma display panel of claim 1,
wherein a length of the projection electrode ranges substantially from 10 µm to 70 µm.

3. The plasma display panel of claim 1,
wherein a difference between a discharge gap distance of the nearest corresponding electrode lines and a discharge gap distance of the corresponding projection electrodes ranges substantially from 20 µn to 140 µm.

4. The plasma display panel of claim 1,
wherein a width of a portion of the projection electrode connected to the electrode line is more than a width of an edge portion of the projection electrode.

5. The plasma display panel of claim 1,
wherein each of the sustain electrodes comprises a bridge electrode for coupling the adjacent electrode lines to each other.

6. A plasma display panel comprising:
a substrate; and
a sustain electrode formed on the substrate,
wherein the sustain electrode comprises at least two electrode lines intersecting a discharge cell, at least one first projection electrode connected to the electrode line nearest to a central portion of the discharge cell and projecting toward a central direction within the discharge cell, and a second projection electrode connected to the electrode line furthest from the central portion of the discharge cell and projecting in a direction away from the central portion of the discharge cell.

7. The plasma display panel of claim 6,
wherein when the number of the first projection electrodes equals one, the first projection electrode is formed at the central portion of the discharge cell.

8. The plasma display panel of claim 6,
wherein when the number of the first projection electrodes equals two, the two first projection electrodes are formed to be symmetric with each other on opposite sides of the central portion of the discharge cell.

9. The plasma display panel of claim 6,
wherein when the number of the first projection electrodes equals three, one first projection electrode is formed at the central portion of the discharge cell and the remaining two first projection electrodes are formed to be symmetric with each other on opposite sides of the central portion of the discharge cell.

10. The plasma display panel of claim 6,
wherein when the number of the first projection electrodes is plural, the width and length of each of the first projection electrodes are different from each other.

11. The plasma display panel of claim 6,
wherein a width of a portion of the first projection electrode connected to the electrode line is more than a width of an edge portion of the first projection electrode.

12. The plasma display panel of claim 6,
wherein a length of the first projection electrode ranges substantially from 10 µm to 70 µm.

13. The plasma display panel of claim 6,
wherein two sustain electrodes are formed in a pair within one discharge cell.

14. The plasma display panel of claim 13,
wherein a difference between a discharge gap distance of the nearest corresponding electrode lines and a discharge gap distance of the corresponding first projection electrodes ranges substantially from 20 µn to 140 µm.

15. The plasma display panel of claim 6,
wherein the second projection electrode is formed at a central portion of the electrode line.

16. The plasma display panel of claim 6,
wherein the second projection electrode extends in a direction up to a barrier rib partitioning the discharge cell.

17. The plasma display panel of claim 6,
wherein the second projection electrode extends in a direction over a barrier rib partitioning the discharge cell.

18. The plasma display panel of claim 6,
wherein the sustain electrode further comprises a bridge electrode for coupling the adjacent electrode lines to each other.

19. The plasma display panel of claim 18,
wherein the two electrode lines are coupled through one bridge electrode.

20. The plasma display panel as claimed in 18,
wherein the bridge electrode is formed within the discharge cell.

21. The plasma display panel of claim 18,
wherein the bridge electrode is formed over a barrier rib partitioning the discharge cell.

22. The plasma display panel of claim 6,
wherein a width of the barrier rib, which partitions the discharge cell and is formed at a portion where the second projection electrode extends to, equals substantially 200 µm or less.

23. The plasma display panel of claim 22,
wherein the width of the barrier rib ranges from 90 µm to 100 µm.

24. The plasma display panel of claim 6,
wherein a width of the electrode lines ranges substantially from 20 µm to 70 µm.

25. A plasma display panel comprising:
a substrate; and
sustain electrodes formed in a pair on the substrate,
wherein each of the sustain electrodes comprises two electrode lines intersecting a discharge cell, at least one first projection electrode connected to the electrode line nearest to a central portion of the discharge cell and projecting toward a central direction within the discharge cell, and a second projection electrode connected to the electrode line furthest from the central portion of the discharge cell and projecting in a direction away from the central portion of the discharge cell.

26. The plasma display panel of claim 25,
wherein each of the sustain electrodes further comprises one bridge electrode for coupling the two electrode lines to each other.

27. The plasma display panel of claim 25,
wherein the first projection electrodes of the sustain electrodes are formed in pairs to face to each other.
